# EUROPÄISCHE PATENTSCHRIFT

(11) **EP 3 384 568 B1**
(45) Veröffentlichungstag und Bekanntmachung des Hinweises auf die Patenterteilung: **30.10.2019**
(21) Anmeldenummer: 16798075.4
(22) Anmeldetag: 21.09.2016
(51) Int. Cl.: H02B 1/01

(54) **RAHMENPROFIL FÜR EIN RAHMENGESTELL EINES SCHALTSCHRANKS UND EIN ENTSPRECHENDES RAHMENGESTELL**
FRAME PROFILE FOR AN ELECTRICAL CABINET FRAME WORK AND CORRESPONDING FRAME WORK
PROFILÉ POUR CHÂSSIS D'ARMOIRE ÉLECTRIQUE ET CHÂSSIS CORRESPONDANT

(30) Priorität: 04.12.2015 DE 102015121192
(43) Veröffentlichungstag der Anmeldung: 10.10.2018
(73) Patentinhaber: Rittal GmbH & Co. KG, 35745 Herborn (DE)
(72) Erfinder: REUTER, Wolfgang, 56479 Liebenscheid (DE); BRÜCK, Daniel, 35764 Sinn (DE); SCHINDLER, Timo, 35075 Gladenbach (DE); PAUL, Hartmut, 35683 Dillenburg (DE); HOLIGHAUS, Heiko, 35713 Eschenburg (DE)
(74) Vertreter: Angerhausen, Christoph
(86) Internationale Anmeldenummer: PCT/DE2016/100440
(87) Internationale Veröffentlichungsnummer: WO 2017/092726

(56) Entgegenhaltungen:
- EP-A1- 1 770 838
- DE-A1-102006 003 771
- US-A1- 2005 174 020
- US-B2- 6 965 075

## Beschreibung

Die Erfindung geht aus von einem Rahmenprofil für ein Rahmengestell eines Schaltschranks, wobei das Rahmenprofil aufweist:
- einen ersten und einen zweiten Profilsteg, wobei ein freies Ende des ersten Profilstegs eine erste Dichtkante und ein freies Ende des zweiten Profilstegs eine zweite Dichtkante aufweist, wobei mindestens einer der Profilstege einen Hinterschnitt aufweist,
- eine erste Montageseite mit Befestigungsaufnahmen, die um eine erste Abmessung einer ersten Verbindungsseite des ersten Profilstegs, die die erste Montageseite mit der ersten Dichtkante verbindet, von der ersten Dichtkante beabstandet ist,
- eine zweite Montageseite mit Befestigungsaufnahmen, die um eine zweite Abmessung einer zweiten Verbindungsseite des zweiten Profilstegs, die die zweite Montageseite mit der zweiten Dichtkante verbindet, von der zweiten Dichtkante beabstandet ist.

Ein derartiges Rahmenprofil ist aus der DE 10 2006 003 771 A1 bekannt. Ein ähnliches Rahmenprofil beschreiben auch die DE 10 2014 101 404 A1, die US 6,965,075 B2 und die EP 1 770 838 A1. Ein weiteres Rahmenprofil, bei dem anstelle von Profistegen mit Dichtkanten parallel zur Dichtebene verlaufende Dichtseiten ausgebildet sind, ist aus der US 2001/0050516 A1 bekannt.

Bei der Konstruktion eines Rahmenprofils für ein Rahmengestell eines Schaltschranks muss gewährleistet werden, dass die Rahmenprofilgeometrie einerseits die kostengünstige Herstellung des Rahmenprofils erlaubt und andererseits sichergestellt ist, dass das Rahmenprofil einen möglichst großen Funktionsumfang bei seiner Verwendung im Schaltschrankbau aufweist. Es hat sich herausgestellt, dass das aus der DE 10 2014 101 404 A1 bekannte Rahmenprofil bei der Schaltschrankanreihung, bei der Montage von Zubehör sowie bei der Montage von Flachteilen und hinsichtlich der erreichbaren IP-Schutzfähigkeit verbesserungsbedürftig ist.

Es ist daher die Aufgabe der Erfindung, die bekannten Rahmenprofile derart weiter zu entwickeln, dass sie unter Beibehaltung einer einfachen Grundkonstruktion unter Verwendung möglichst weniger Abkantungen einen erweiterten Funktionsumfang insbesondere hinsichtlich der Anreihbarkeit, Montage von Zubehör und Flachteilen sowie hinsichtlich der IP-Schutzfähigkeit aufweist.

Diese Aufgabe wird erfindungsgemäß durch ein Rahmenprofil mit den Merkmalen des Anspruchs 1 gelöst. Der Anspruch 13 betrifft ein entsprechendes Rahmengestell und die abhängigen Ansprüche betreffen jeweils vorteilhafte Ausführungsformen der Erfindung.

Demgemäß ist vorgesehen, dass die Verbindungsseite des den Hinterschnitt aufweisenden Profilstegs an der Dichtkante über eine stetige Umkantung von mehr als 180° in eine weitere Profilseite des den Hinterschnitt aufweisenden Profilstegs übergeht, so dass die Dichtkante eine sphärische Dichtkontur aufweist.

Der Hinterschnitt kann beispielsweise dazu dienen, dass eine Aufsteckdichtung über eine Nut, die gegebenenfalls ebenfalls hinterschnittig ausgebildet ist, auf den hinterschnittigen Profilsteg aufgesteckt und dort festgelegt werden kann. Gegenüber den aus dem Stand der Technik bekannten Rahmenprofilgeometrien wird so ein besserer Halt einer Aufsteckdichtung erreicht.

Eine von dem hinterschnittigen Profilsteg gebildete, hinterschnittige Kontur kann weiterhin dazu dienen, um ein Montageelement für die Befestigung von Zubehör im Schaltschrankinnenraum festzulegen, wozu das Montageelement beispielsweise formschlüssig in der hinterschnittigen Kontur aufgenommen und gegebenenfalls festgelegt ist. Die hinterschnittige Kontur kann insbesondere dann, wenn das Rahmenprofil ein Horizontalprofil des Rahmengestells eines Schaltschranks bildet, auch als eine Regenrinne für die Ableitung von Flüssigkeit weg von der Dichtkante dienen. Die hinterschnittige Kontur eines Horizontalprofils kann weiterhin eine Aufnahme eines Halters für Flachteile eines Schaltschranks sein. Nicht zuletzt kann die hinterschnittige Kontur zu Positionierzwecken verwendet werden, etwa um bei der Schaltschrankanreihung die (Vertikal-)Profile aneinander grenzender Rahmengestelle unter einem definierten Abstand zueinander anzuordnen.

Das Rahmenprofil kann insbesondere eine im Querschnitt geschlossene Profilgeometrie aufweisen. Die Profilgeometrie kann jedoch auch offen sein, wobei dann auch vorgesehen sein kann, dass eine offene Profilseite des im Querschnitt offenen Rahmenprofils von einer Profilseite eines Zusatzprofils verschlossen wird. Ein derartiges Konzept ist aus der taggleich eingereichten deutschen Patentanmeldung DE 10 2015 121 193 A1 bekannt.

Weiterhin kann sich die Verbindungsseite des den Hinterschnitt aufweisenden Profilstegs unter einem spitzen Winkel mit α > 0° zu einer weiteren Profilseite des den Hinterschnitt aufweisenden Profilstegs erstrecken. Dabei kann sich der Winkel α zu der Dichtkante hin öffnen. Der spitze Winkel α kann zwischen 1° und 10 ° betragen und beträgt vorzugsweise ca. 5°.

Die Verbindungsseite des den Hinterschnitt aufweisenden Profilstegs und die weitere Profilseite des den Hinterschnitt aufweisenden Profilstegs können sich bis auf einen Mindestabstand mit a > 0 cm annähern. Es kann eine Kavität zwischen der Verbindungsseite und der weiteren Verbindungsseite ausgebildet sein. Diese kann wiederum über eine Öffnung an einer Stelle, an der sich die Verbindungsseite und die weitere Profilseite bis auf den Mindestabstand annähern, zugänglich sein. Die Kavität kann weiterhin über sich durch die Verbindungsseite hindurch erstreckende Durchlässe zugänglich sein.

Die weitere Profilseite des den Hinterschnitt aufweisenden Profilstegs kann an einer Stelle maximaler Annäherung an die Verbindungsseite über eine Abkantung unter einem stumpfen Winkel in eine gerade Stegverbindungsseite, die die beiden Profilstege über ihre weiteren Profilseiten miteinander verbindet, übergehen.

Die Verbindungsseite des den Hinterschnitt aufweisenden Profilstegs kann über eine 90°-Abkantung in die um die Abmessung von der Dichtkante des Profilstegs beabstandete Montageseite übergehen.

Die Montageseiten können sich unter einem Winkel von 90° zueinander erstrecken, wobei sie jeweils an einer Stelle maximaler Annäherung aneinander über eine weitere Abkantung in die jeweils zugeordnete Verbindungsseite übergehen.

Dabei können die Montageseiten Profilseiten eines im Querschnitt rechteckigen Grundkörpers sein, wobei das Rahmenprofil in einer Querschnittsebene senkrecht zu seiner Längsachse spiegelsymmetrisch zu einer durch einen gedachten Schnittpunkt der beiden Montageseiten und eine zu diesem Schnittpunkt diametral gegenüber liegenden Kante des Grundkörpers, an der zwei weitere senkrecht zueinander verlaufende Profilseiten des Grundkörpers ineinander übergehen, verlaufenden Symmetrieachse ist. In der Querschnittsebene können die Abkantungen senkrecht zu der Symmetrieachse einen weiteren Mindestabstand mit b > 0 cm aufweisen.

Die Verbindungsseite des den Hinterschnitt aufweisenden Profilstegs kann zwischen der Dichtkante und einer Stelle maximaler Annäherung an die weitere Profilseite eine Mehrzahl unter einem Rasterabstand angeordneter und sich durch die Verbindungsseite hindurch erstreckender Durchlässe aufweisen.

Das Rahmenprofil kann ein Horizontalprofil eines Rahmengestells eines Schaltschranks sein, wobei sich die Verbindungsseite des den Hinterschnitt aufweisenden Profilstegs horizontal und oberhalb davon die weitere Profilseite unter dem spitzen Winkel zur Horizontalen und von der Dichtkante im Verlauf des Profilstegs abfallend erstreckt. Wenn dabei das Rahmenprofil ein oberes Horizontalprofil eines Rahmengestells ist, kann ein Halter für Flachteile, der an einem Flachteil an dessen oberem Ende festgelegt ist, auf die weitere Profilseite aufgelegt sein. Dabei kann entweder eine Aufsteckdichtung über die Dichtkante auf den Profilsteg mit dem Hinterschnitt aufgesteckt sein, die mit einer Dichtfläche an einer dem Horizontalprofil zugewandten Innenseite eines Flachteils anliegt, oder es kann ein Dichtelement an der Innenseite des Flachteils angeordnet sein, das an der Dichtkante anliegt. Dadurch wird erreicht, dass die Aufsteckdichtung oder das Dichtelement durch eine Hangabtriebskraft, die der Halter mit dem daran festgelegten Flachteil auf der weiteren Profilseite erfährt, komprimiert wird.

Es ist weiterhin denkbar, dass die weitere Profilseite eine über ihre gesamte Fläche geschlossene Profilseite ist, die mit einer geraden Stegverbindungsseite, in die sie über eine Abkantung unter einem stumpfen Winkel übergeht, eine Regenrinne bildet.

Das zuvor beschriebene Rahmengestell eignet sich insbesondere für die Ausbildung eines quaderförmigen Rahmengestells eines Schaltschranks mit vier Vertikal- und acht Horizontalstreben, wobei in den acht Ecken des Rahmengestells jeweils drei Rahmenprofile rechtwinklig zueinander angeordnet sind. Die Rahmenprofile können unter Verwendung von Eckverbindern rechtwinklig zueinander angeordnet und miteinander verbunden sein. Es kann insbesondere vorgesehen sein, dass sämtliche der zwölf Profilstreben des Rahmengestells eine identische Querschnittsgeometrie aufweisen, so dass für die Ausbildung des Rahmengestells nur eine Profilart erforderlich ist. Es kann insbesondere vorgesehen sein, dass an den sechs Seiten des Rahmengestells Dichtkanten von vier rechtwinklig aneinander grenzenden Rahmenprofilen eine rechteckige, umlaufend geschlossene Dichtkante bilden, die eine äußere Kante der jeweiligen Seite des Rahmengestells bildet.

Weitere Einzelheiten der Erfindung werden anhand der nachstehenden Figuren erläutert, die beispielhafte Ausführungsformen zeigen. Dabei zeigt:
- Figur 1: in perspektivischer Darstellung ein Rahmengestell eines Schaltschranks;
- Figur 2: eine Seitenansicht des Rahmengestells gemäß Figur 1;
- Figur 3a: eine Detailansicht einer oberen Ecke des Rahmengestells gemäß Figur 1 in perspektivischer Darstellung und von der Innenseite des Rahmengestells betrachtet;
- Figur 3b: die Ecke gemäß Figur 3a in perspektivischer Darstellung und von der Außenseite des Rahmengestells betrachtet;
- Figur 3c: eine Draufsicht auf die Bodengruppe des Rahmengestells gemäß Figur 1 mit entferntem Vertikalprofil;
- Figur 4: eine Ausführungsform eines Rahmenprofils im Querschnitt senkrecht zur Längsrichtung;
- Figur 5: ein erstes Anwendungsbeispiel des Rahmenprofils gemäß Figur 4;
- Figur 6: ein zweites Anwendungsbeispiel des Rahmenprofils gemäß Figur 4;
- Figur 7: ein drittes Anwendungsbeispiel des Rahmenprofils gemäß Figur 4;
- Figur 8: ein viertes Anwendungsbeispiel des Rahmenprofils gemäß Figur 4;
- Figur 9: ein fünftes Anwendungsbeispiel des Rahmenprofils gemäß Figur 4;
- Figur 10: eine perspektivische Darstellung des Rahmenprofils gemäß Figur 4; und
- Figur 11a und 11b: den Montagevorgang eines Vertikalprofils auf einer Bodengruppe zur Ausbildung eines Rahmengestells.

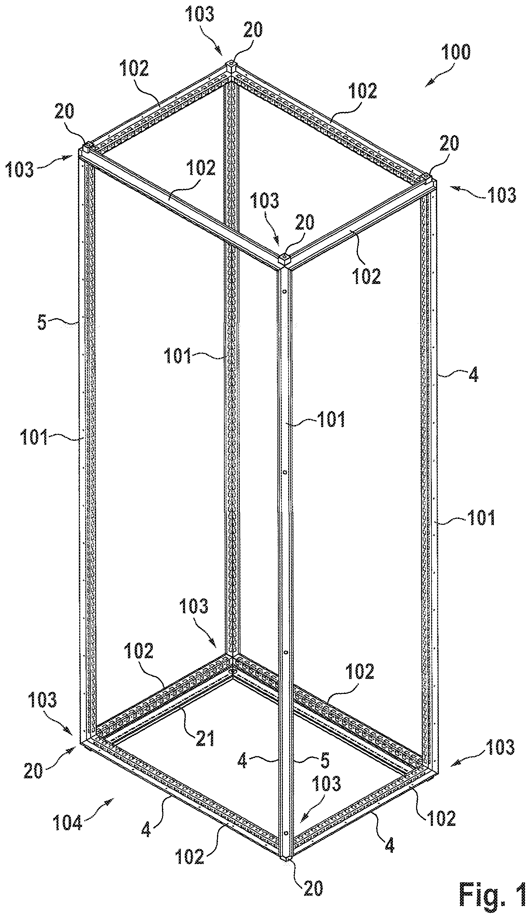

Die Figur 1 zeigt ein Rahmengestell 100, das aus vier Vertikalstreben 101 und acht Horizontalstreben 102, die als identische Rahmenprofile ausgebildet sind, aufgebaut ist, wobei in den Ecken 103 des kubischen Rahmengestells 100 jeweils drei senkrecht zueinander ausgerichtete Rahmenprofile 101, 102 über einen Eckverbinder 20 zueinander angeordnet und miteinander verbunden sind. Es ist zu erkennen, dass im Eckbereich 103 die Dichtkanten 4, 5 der Rahmenprofile 1 des Rahmengestells 100 bzw. die zugehörigen Profilstege aneinander grenzend zueinander angeordnet sind, so dass an einer jeweiligen Seite des Rahmengestells 100 eine umlaufend geschlossene Dichtkante gebildet ist, die gerade an der entsprechenden Seite des Rahmengestells 100 eine Außenkante des Rahmengestells 100 bildet, über die das Rahmengestell 100 beispielsweise dichtend an ein Flachteil oder dergleichen und gegebenenfalls unter Verwendung eines Dichtelements anliegen kann. Die rechtwinklig aufeinander stoßenden Dichtkanten können im Eckbereich miteinander verbunden, beispielsweise miteinander verschweißt sein. Sie können auch über eine zusätzliche Dichtfläche oder Dichtkante eines Eckstücks miteinander verbunden sein, um so eine umlaufend geschlossene Dichtkante bzw. Dichtfläche zu bilden.

Die vier unteren Horizontalprofile 102 bilden einen Bodenrahmen bzw. eine Bodengruppe 104 des Rahmengestells 1 00, wobei die Bodengruppe 104 auf einen Zusatzrahmen 21 aufgesetzt und gegebenenfalls mit diesem verbunden ist. Über den Zusatzrahmen 21 wird im Bodenbereich des Rahmengestells 100 eine zusätzliche Funktion bereitgestellt, hier eine zusätzliche Montageebene entlang des Innenumfangs der Bodengruppe 21, etwa für die Befestigung einer Bodenwanne.

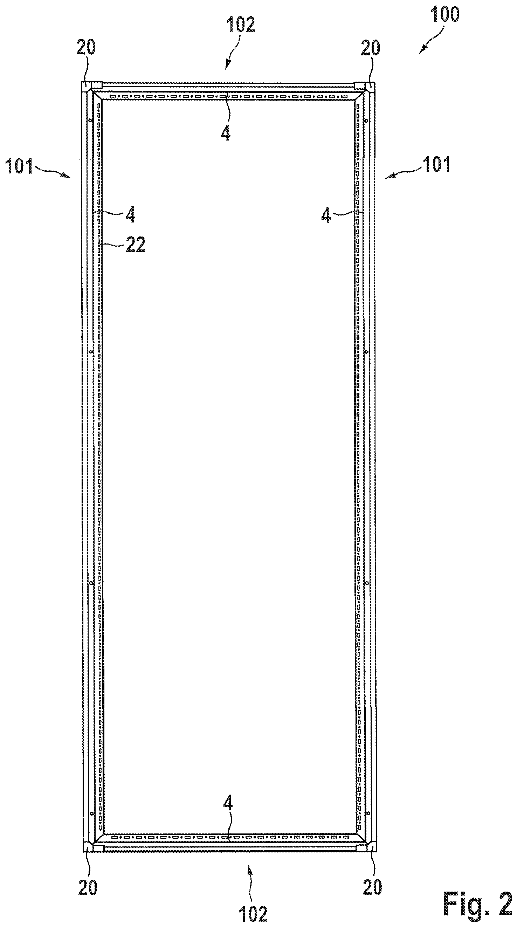

Die Figur 2 zeigt eine Seitenansicht des Rahmengestells 100 gemäß Figur 1, wobei eine Seitenfläche des Rahmengestells 100 aus zwei Vertikalstreben 101 und zwei senkrecht dazu angeordneten Horizontalstreben 102 zusammengesetzt ist. Es ist wiederum zu erkennen, dass die Dichtkante 4 der Horizontal- und Vertikalstreben umlaufend geschlossen ausgebildet ist und so eine zuverlässige Abdichtung gegenüber einem seitlichen Flachteil oder dergleichen bilden kann. In Richtung senkrecht zur Zeichnungsebene gegenüber der Dichtkante 4 zurückversetzt ist eine Montageseite 22 mit Montageöffnungen, wodurch die Montage von Schaltschrankeinbauten von der Außenseite des Schaltschranks her ermöglicht wird. Dieses Konzept ist in der DE 10 2014 101 404 A1 näher beschrieben.

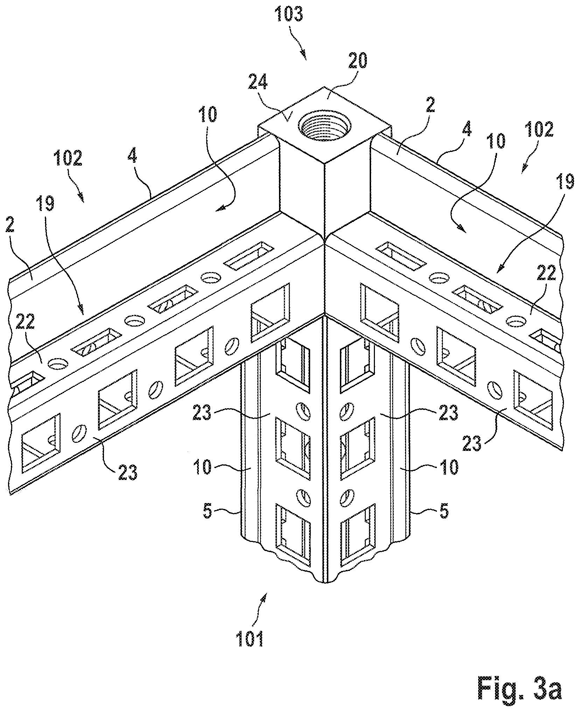

Die Figur 3a zeigt eine perspektivische Ansicht eines oberen Eckbereichs des Rahmengestells 100 gemäß Figur 1. Hier treffen zwei Horizontalstreben 102 und eine Vertikalstrebe 101 rechtwinklig aufeinander und sind über ein Eckstück 20 senkrecht zueinander ausgerichtet und miteinander verbunden. Es ist weiterhin zu erkennen, dass an der Oberseite des Rahmengestells 100, anders als an der in Figur 2 gezeigten, vertikalen Seitenfläche des Rahmengestells 100, die Dichtkanten 4 der Horizontalprofile 102 nicht unmittelbar ineinander übergehen, sondern über eine Dichtfläche 24 miteinander verbunden sind. Dazu fluchtet die Dichtfläche 24 gerade mit den Dichtkanten 4. In Vertikalrichtung nach unten versetzt in Bezug auf die Dichtkanten 4 ist jeweils eine Montageseite 22 mit einer Systemlochung ausgebildet, um so eine gegenüber der Dichtkante 4 zurückversetzte Montageebene zu bilden. Von dieser Montageseite 22 rechtwinklig abgekantet ist eine weitere Montageseite 23 mit einer weiteren Systemlochung ausgebildet. Die weiteren Montageseiten 23 der Horizontalprofile 102 grenzen unter einem rechten Winkel aneinander. In der Verbindungsseite 10 der Profilstege 2 können regelmäßig beabstandet Durchlässe 19 angeordnet sein, um eine Abzählhilfe zu bilden. Die weiteren Montageseiten 23 des Vertikalprofils 101 sind ebenfalls derart angeordnet, dass sie sich parallel beabstandet zu den Verbindungsseiten 10 der Dichtstege 2 erstrecken, um so eine gegenüber den Profilseiten 10 der Profilstege 2 zum Inneren des Schaltschranks hin versetzte Montageebene zu bilden.

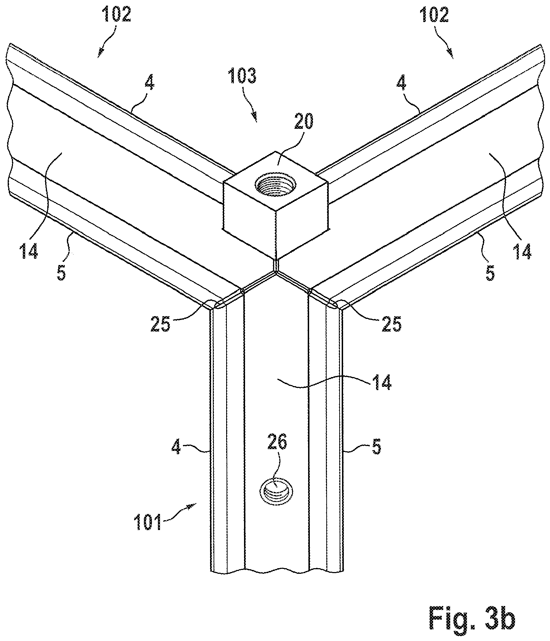

Die Figur 3b lässt erkennen, dass die Profilstege 2 sowie die Stegverbindungsseiten 14 der Horizontalstreben 102 und der Vertikalstrebe 101 im Eckbereich 103 ausgeklinkt sind, um einerseits das Hindurchtreten des Eckverbinders 20 durch die Stegverbindungsseite 14 und andererseits das formschlüssige Aneinandergrenzen der Horizontalprofile 102 an das Vertikalprofil 101 unter Ausbildung von geraden Schweißnähten 25 zu ermöglichen. In der Stegverbindungsseite 14 des Vertikalprofils 101 ist eine Gewindebohrung 26 zur Befestigung von Zubehörteilen oder einer Kranöse ausgebildet.

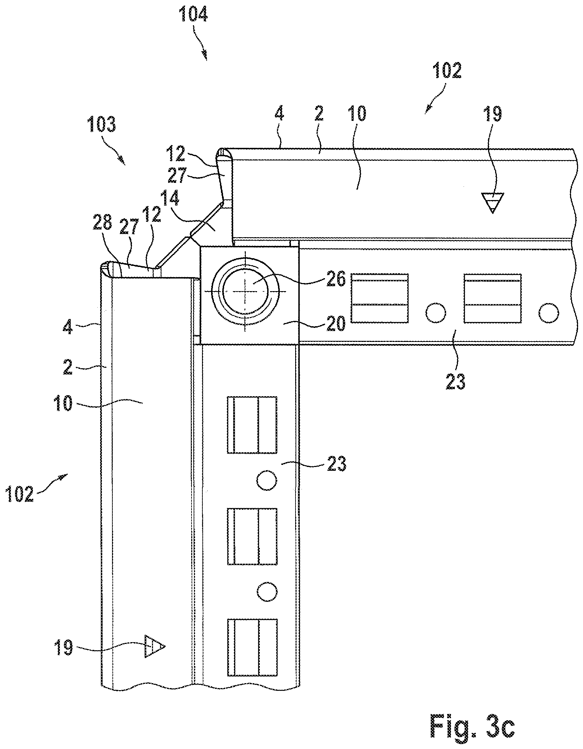

Die Figur 3c zeigt eine Detailansicht der Bodengruppe 104 des Rahmengestells 100 gemäß Figur 1 in der Draufsicht von oben. Der aus den vier oberen Horizontalstreben des Rahmengestells 100 gemäß Figur 1 gebildete Deckrahmen kann im Eckbereich in der Draufsicht von unten entsprechend ausgebildet sein. Insbesondere können der Deckrahmen und der die Bodengruppe 104 bildende Bodenrahmen identisch ausgebildete und um 180° verdreht zueinander angeordnete Bauteile sein. Zur Veranschaulichung ist in der Darstellung gemäß Figur 3c das Vertikalprofil 101 (siehe Figur 1) entnommen.

Es ist zu erkennen, dass im Eckbereich 103 die in dem Eckbereich 103 endenden Enden der Horizontalprofile 102 derart ausgeklinkt sind, dass in der dargestellten Draufsicht die weitere Profilseite 12 des Profilstegs 2 einen Überstand 27 aufweist, mit dem sie über die freie Kante 28 der zweiten Verbindungsseite 10 des Profilstegs 2 hervorsteht. Dadurch bildet der Überstand 27 eine Aufstandsfläche für das Vertikalprofil (nicht dargestellt), wenn dieses von oben in die Ecke eingesetzt wird. Dadurch wird die Ausrichtung des Vertikalprofils gegenüber den die Bodengruppe 104 bildenden Horizontalstreben 102 erleichtert wird. In dem Eckverbinder 20 ist eine Gewindebohrung 26 ausgebildet, etwa für die Montage der Bodengruppe 104 auf einen Schaltschranksockel.

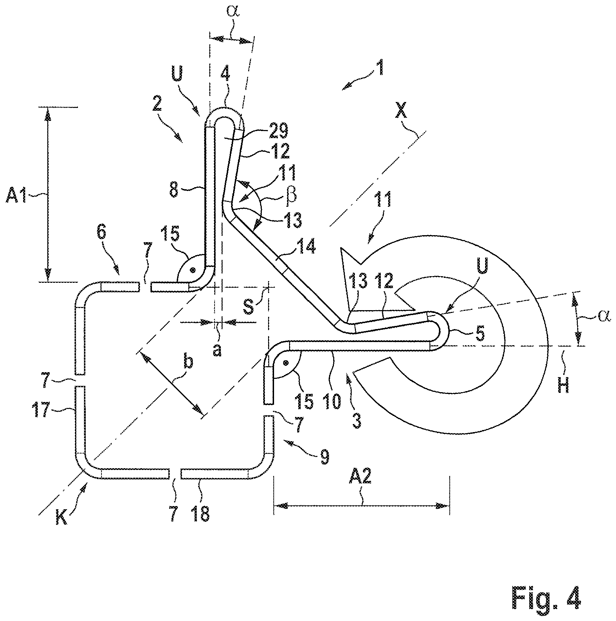

In Figur 4 ist eine Ausführungsform eines Rahmenprofils 1 in Querschnittsrichtung senkrecht zur Längsrichtung des Profils 1 dargestellt. Das Profil 1 zeichnet sich gegenüber dem aus der DE 10 2014 101 404 A1 bekannten Profil dadurch aus, dass die Profilstege 2, 3 jeweils mit einem Hinterschnitt 11 ausgebildet sind, wodurch dem Rahmenprofil 1 durch eine vergleichsweise einfache Maßnahme in funktioneller Hinsicht ein wesentlicher Mehrwert verliehen wird. Der Hinterschnitt 11 ist dadurch ausgebildet, dass das Profil 1 an seinen Profilstegen 2, 3 jeweils eine Verbindungsseite 8, 10 und sich dazu unter einem spitzen Winkel α erstreckende weitere Profilseite 12 aufweist, die über eine Umkantung U von mehr als 180°, nämlich gerade 180° + α, ineinander übergehen. Es ist weiterhin zu erkennen, dass die sich senkrecht zueinander erstreckenden Verbindungsseiten 8, 10 und die jeweils zugeordnete weitere Profilseite 12 sich bis auf einen Mindestabstand a aneinander annähern, wobei mit dem Erreichen des Mindestabstands a die jeweilige weitere Profilseite 12 in die Stegverbindungsseite 14 von der Verbindungsseite 8, 10 weg abgekantet ist. Der spitze Winkel α kann zwischen 1° und 10° betragen und beträgt vorzugsweise ca. 5°.

Die Profilstege 2, 3 umschließen somit jeweils zwischen ihrer Verbindungsseite 8, 10 und ihrer weiteren Profilseite 12 eine sich von der Dichtkante 4, 5 im weiteren Verlauf der Verbindungsseiten 8, 10 und der weiteren Profilseite 12 verjüngende Kavität 29, die an der Stelle maximaler Annäherung zwischen den Verbindungsseiten 8, 10 und der weiteren Profilseite 12 über einen Zugang zugänglich ist. An dieser Stelle geht gerade auch die Steckverbindungsseite 14 unter einem stumpfen Winkel β in die jeweilige weitere Profilseite 12 über. Die erste Verbindungsseite 8 geht über einen rechten Winkel 15 in die Montageseite 6 und die zweite Verbindungsseite 10 über einen weiteren rechten Winkel 15 in die zweite Montageseite 9 über. Die Montageseiten 6, 9 weisen jeweils eine Systemlochung aus Befestigungsaufnahmen 7 auf. Wiederum rechtwinklig zu den Montageseiten 6, 9 sind weitere Profilseiten 17, 18 mit weiteren Befestigungsaufnahmen 7 angeordnet, wobei die Profilseiten 17, 18 selbst senkrecht zueinander angeordnet sind. Mithin sind die Profilseiten 6 und 18 sowie die Profilseiten 9 und 17 parallel zueinander angeordnet.

Es ist erkennbar, dass die Montageseiten 6, 9 Profilseiten eines im Querschnitt rechteckigen Grundkörpers sind, wobei das Rahmenprofil 1 in der dargestellten Querschnittsebene senkrecht zu seiner Längsachse spiegelsymmetrisch zu einer Symmetrieachse X ist, die durch einen gedachten Schnittpunkt S der beiden Montageseiten 6, 9 und durch eine zu diesem Schnittpunkt S diametral gegenüber liegenden Kante K des Grundkörpers, an der zwei weitere senkrecht zueinander verlaufende Profilseiten 17, 18 des Grundkörpers ineinander übergehen, verläuft. Die Abkantungen 16 weisen senkrecht zu der Symmetrieachse X einen weiteren Mindestabstand b mit b > 0 cm auf.

Die Montageseiten 6, 9 sind um Abmessungen A1, A2 von den jeweiligen Dichtkanten 4, 5 beabstandet, um so eine gegenüber den Dichtkanten versetzte Montageebene zu bilden.

Das Rahmenprofil 1 ist als ein geschlossenes Rahmenprofil ausgebildet. Es ist jedoch denkbar, dass das Rahmenprofil 1 eine offene Querschnittsgeometrie aufweist. Dazu ist beispielsweise denkbar, dass zumindest eine der beiden Profilseiten 17, 18 zumindest anteilig entfernt ist, um so von der Innenseite des Schaltschranks einen Zugang in das Profilinnere zu ermöglichen.

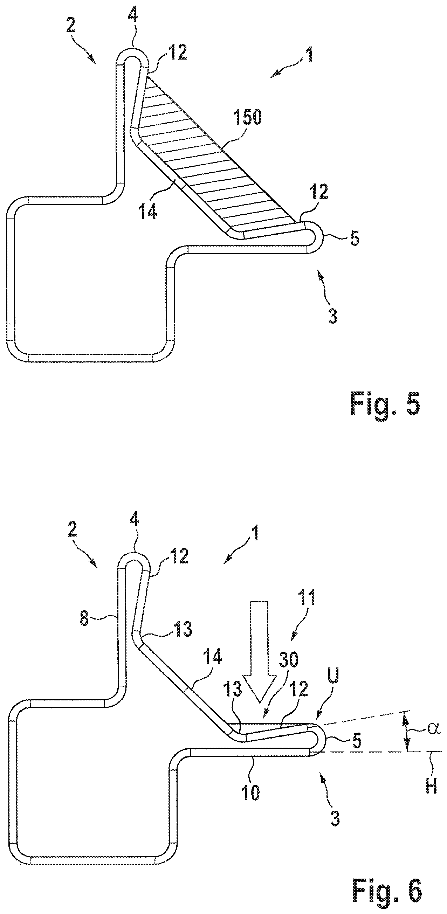

Die Figur 5 zeigt eine Anwendungsform der in Figur 4 gezeigten Rahmenprofilgeometrie. Wie zu erkennen ist, ist ein Befestigungskeil 150 in eine von der weiteren Profilseite 12 und der Stegverbindungsseite 14 gebildete Aufnahme eingesetzt. Der Befestigungskeil 150 kann beispielsweise dazu dienen, um ein Zubehörteil von außen an dem Profil des Rahmengestells des Schaltschranks zu befestigen. Wenn das Rahmenprofil beispielsweise ein oberes Horizontalprofil ist, kann der Befestigungskeil 150 dazu verwendet werden, um ein Flachteil des Schaltschranks von außen in das Rahmengestell einzuhängen. Es ist zu erkennen, dass der Befestigungskeil 150 nicht über eine gedachte, an den beiden Dichtkanten 4, 5 anliegende Tangente hinausragt und somit vollständig in der gebildeten Aufnahme aufgenommen ist.

In Figur 6 ist eine weitere Funktionalität des Rahmenprofils gemäß Figur 2 veranschaulicht, wenn dieses als Horizontalprofil eines Rahmengestells für einen Schaltschrank verwendet wird. Wenn das Rahmenprofil ein Horizontalprofil ist, erstreckt sich die zweite Verbindungsseite 10 gerade horizontal und die weitere Profilseite 12 des Profilstegs unter einem spitzen Winkel α zu der Horizontalen H, wobei die weitere Profilseite 12 mit steigendem Abstand zu der zweiten Dichtkante 5 abfallend und sich der zweiten Verbindungsseite 10 annähernd erstreckt, bis sie an einer Abkantung 13, wo sie einen lokalen Tiefpunkt einnimmt, in die aufsteigende Stegverbindungsseite 14 über eine Abkantung übergeht. Auf diese Weise wird durch die gegenüber der Horizontalen H gegenläufig angewinkelten Stegverbindungsseite 14 und weiteren Profilseite 12 eine Regenrinne 30 gebildet, wodurch erreicht wird, dass an der Dichtkante 5 anfallendes Wasser von der Dichtkante 5 weg in Richtung der Abkantung 13 abgeleitet wird, so dass die Dichtkante 5 nicht mit Wasser beaufschlagt ist.

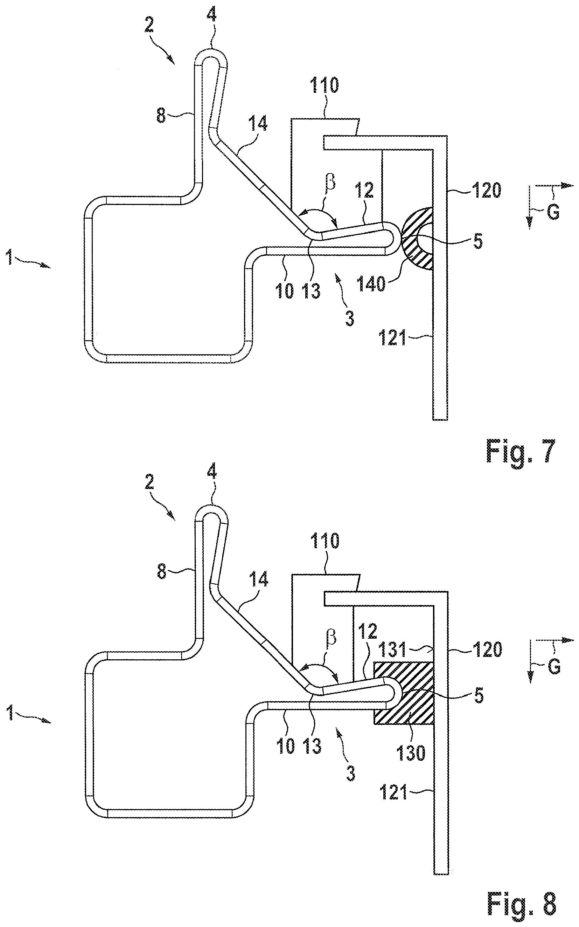

In Figur 7 ist veranschaulicht, wie ein Flachteil 120 mit Hilfe eines Halters 110 in die zwischen der weiteren Profilseite 12 und der Stegverbindungsseite 14 gebildete Vertiefung eingesetzt werden kann. An der Innenseite 121 des Flachteils 120 ist ein Dichtelement 140 angeordnet, das an der Dichtkante 5 anliegt. Aufgrund der Belastung des Halters 110 durch das Flachteil in Richtung der Gravitationskraft G erfährt der Halter 110 eine Hangabtriebskraft entlang der weiteren Profilseite 12 in Richtung der Abkantung 13, wodurch das Dichtelement 140 gegen die Dichtkante 5 zur dichtenden Anlage gedrückt wird.

Wie in Figur 8 gezeigt ist, kann anstelle eines an der Innenseite 121 des Flachteils 120 angeordneten Dichtelements 140 (siehe Figur 7) eine Aufsteckdichtung 130 auf den hinterschnittigen Profilsteg 2 aufgesetzt werden. Aufgrund des Hinterschnitts nimmt die Aufsteckdichtung 130 in ihrem aufgesteckten Zustand gemäß Figur 8 eine kraftschlüssige Verbindung mit dem Profilsteg 2 ein. Um dies noch zu fördern, kann eine Nut der Aufsteckdichtung 130, mit welcher die Aufsteckdichtung 130 über die Dichtkante 5 des Profilstegs aufgeschoben ist, ebenfalls eine den Hinterschnitt des Profilstegs 2 negativ abbildenden Hinterschnitt aufweisen. Auch hierbei kann analog zu der Ausführungsform in Figur 7 der Halter 110 aufgrund der Hangabtriebskraft auf der weiteren Profilseite 12 in Richtung der Abkantung 13 verlagert werden, um so die Aufsteckdichtung 130 an die Innenseite 120 des Flachteils 120 dichtend anzudrücken.

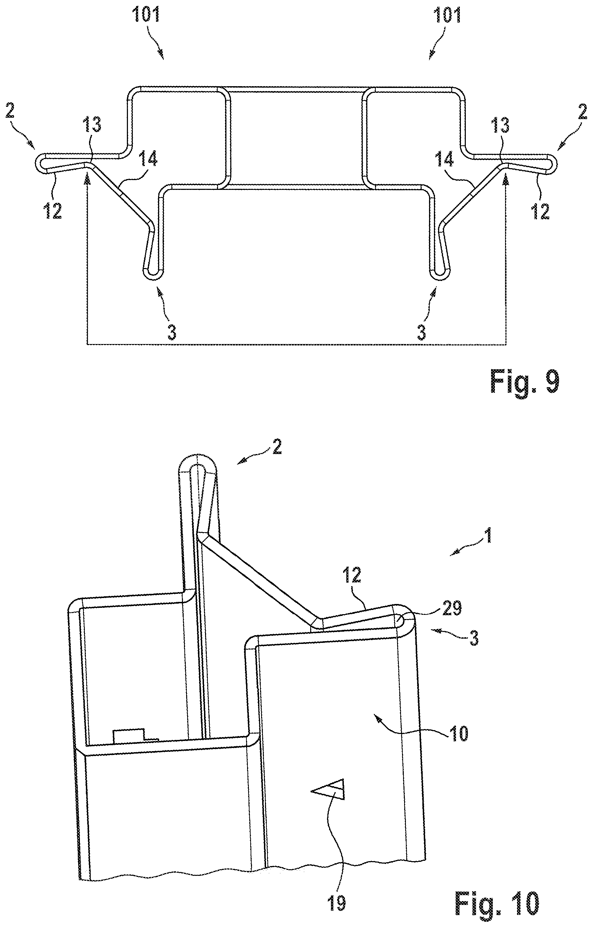

Die Figur 9 veranschaulicht die Anreihsituation von zwei einander zugewandten Vertikalprofilen 101 aneinandergrenzender Rahmengestelle. Bei der Anreihung ist es wesentlich, dass vor der Montage eines entsprechenden Anreihverbinders die Rahmengestelle der beiden miteinander zu verbindenden Schaltschränke exakt einen bestimmten horizontalen Abstand zueinander aufweisen. Auch bei dieser Vorausrichtung kann der sich an der Abkantung 13 ergebende lokale Tiefpunkt zwischen der weiteren Profilseite 12 und der Stegverbindungsseite 14 dazu verwendet werden, die Vertikalprofile 101 bei einem bestimmten horizontalen Abstand zueinander anzuordnen.

Die Figur 10 zeigt das Rahmenprofil 1 gemäß Figur 4 in perspektivischer Darstellung, wobei insbesondere der Durchlass 19 in der zweiten Verbindungsseite 10 zu erkennen ist, über welchen die zwischen der zweiten Verbindungsseite 10 und der weiteren Profilseite 12 gebildete Kavität 29 zugänglich ist. Der Durchlass 19 kann beispielsweise dazu dienen, um bei der Tauchlackierung das Abfließen des Lacks aus der Kavität 29 zu unterstützen. Des Weiteren kann eine Mehrzahl regelmäßig beabstandeter Durchlässe 19 in Längsrichtung der zweiten Verbindungsseite 10 vorgesehen sein, um so zusätzlich eine Abzähllochung zu bilden.

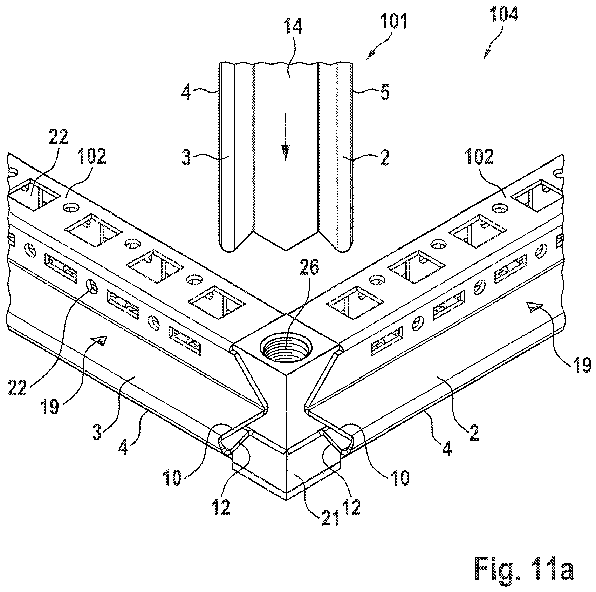

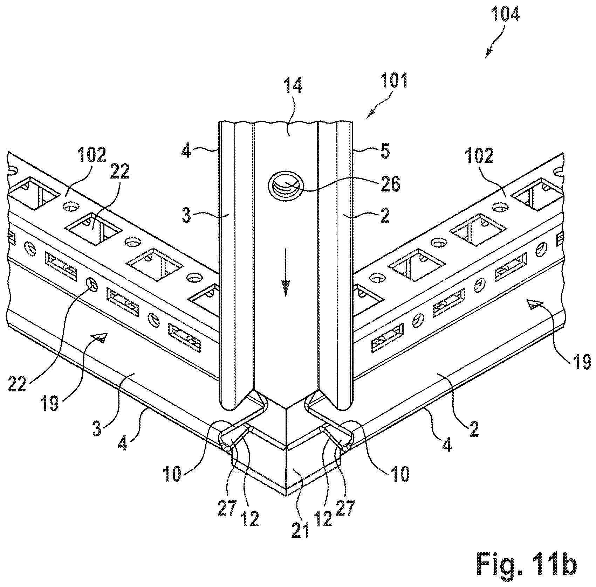

Die Figuren 11a und 11b veranschaulichen die Montage des Vertikalprofils 101 im Eckbereich einer aus zwei Horizontalprofilen 102 gebildeten Bodengruppe 104. Wie bereits mit Bezug auf die Figur 3c beschrieben, kann die weitere Profilseite 12 einen Überstand 27 gegenüber der zweiten Verbindungsseite 10 aufweisen, um so eine Aufstandsfläche für das Vertikalprofil 1 02 zu bilden. Das Vertikalprofil 101 und die Horizontalprofile 102 können im Eckbereich derart ausgeklinkt sein, dass die Dichtkanten 4, 5 im zusammengesetzten Zustand an den jeweiligen Seitenflächen des Schaltschranks umlaufend geschlossene Dichtkanten zur Abdichtung des Rahmengestells gegenüber einem Flachteil bilden. Es kann insbesondere vorgesehen sein, dass die Profile 101, 102 im Eckbereich über Eckverbinder 21 zueinander vorausgerichtet und miteinander verbunden sind.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

### Bezugszeichenliste:

- 1: Rahmenprofil
- 2: erster Profilsteg
- 3: zweiter Profilsteg
- 4: erste Dichtkante
- 5: zweite Dichtkante
- 6: Montageseite
- 7: Befestigungsaufnahme
- 8: erste Verbindungsseite
- 9: zweite Montageseite
- 10: zweite Verbindungsseite
- 11: Hinterschnitt
- 12: weitere Profilseite
- 13: Abkantung
- 14: Stegverbindungsseite
- 15: 90°-Abkantung
- 16: Abkantung
- 17, 18: senkrecht zueinander verlaufende Profilseiten
- 19: Durchlass
- 20: Eckverbinder
- 21: Zusatzrahmen
- 22: Montageseite
- 23: weitere Montageseite
- 24: Dichtfläche
- 25: Schweißnaht
- 26: Gewindebohrung
- 27: Überstand
- 28: freie Kante
- 29: Kavität
- 30: Regenrinne
- 100: Rahmengestell
- 101: Vertikalprofil
- 102: Horizontalprofil
- 103: Ecke
- 104: Bodengruppe
- 110: Halter
- 120: Flachteil
- 121: Innenseite
- 130: Aufsteckdichtung
- 131: Dichtfläche
- 140: Dichtelement
- 150: Befestigungskeil
- α: spitzer Winkel
- β: stumpfer Winkel
- A1: erste Abmessung
- A2: zweite Abmessung
- G: Gravitation
- H: Horizontale
- K: Kante
- U: Umkantung
- S: Schnittpunkt
- X: Symmetrieachse

## Patentansprüche

1. Rahmenprofil (1) für ein Rahmengestell (100) eines Schaltschranks, wobei das Rahmenprofil (1) aufweist:
- einen ersten und einen zweiten Profilsteg (2, 3), wobei ein freies Ende des ersten Profilstegs (2) eine erste Dichtkante (4) und ein freies Ende des zweiten Profilstegs (3) eine zweite Dichtkante (5) aufweist, wobei mindestens einer der Profilstege (2, 3) einen Hinterschnitt (11) aufweist,
- eine erste Montageseite (6) mit Befestigungsaufnahmen (7), die um eine erste Abmessung (A1) einer ersten Verbindungsseite (8) des ersten Profilstegs (2), die die erste Montageseite (6) mit der ersten Dichtkante (4) verbindet, von der ersten Dichtkante (4) beabstandet ist,
- eine zweite Montageseite (9) mit Befestigungsaufnahmen (7), die um eine zweite Abmessung (A2) einer zweiten Verbindungsseite (10) des zweiten Profilstegs (3), die die zweite Montageseite (9) mit der zweiten Dichtkante (5) verbindet, von der zweiten Dichtkante (5) beabstandet ist,
**dadurch gekennzeichnet, dass** die Verbindungsseite (8, 10) des den Hinterschnitt (11) aufweisenden Profilstegs (2, 3) an der Dichtkante (4, 5) über eine stetige Umkantung (U) von mehr als 180° in eine weitere Profilseite (12) des den Hinterschnitt (11) aufweisenden Profilstegs (2, 3) übergeht.

2. Rahmenprofil (1) nach Anspruch 1, bei dem sich die Verbindungsseite (8, 10) des den Hinterschnitt (11) aufweisenden Profilstegs (2, 3) unter einem spitzen Winkel (α) mit α > 0° zu einer weiteren Profilseite (12) des den Hinterschnitt (11) aufweisenden Profilstegs (2, 3) erstreckt.

3. Rahmenprofil (1) nach Anspruch 1 oder 2, bei dem sich die Verbindungsseite (8, 10) des den Hinterschnitt (11) aufweisenden Profilstegs (2, 3) und die weitere Profilseite (12) des den Hinterschnitt (11) aufweisenden Profilstegs (2, 3) bis auf einen Mindestabstand (a) mit a > 0 cm annähern.

4. Rahmenprofil (1) nach Anspruch 3, bei dem die weitere Profilseite (12) des den Hinterschnitt (11) aufweisenden Profilstegs (2, 3) an einer Stelle maximaler Annäherung an die Verbindungsseite (8, 10) über eine Abkantung (13) unter einem stumpfen Winkel (β) in eine gerade Stegverbindungsseite (14) übergeht, die die beiden Profilstege (2, 3) über ihre weiteren Profilseiten (12) miteinander verbindet.

5. Rahmenprofil (1) nach einem der vorangegangenen Ansprüche, bei dem die Verbindungsseite (8, 10) des den Hinterschnitt (11) aufweisenden Profilstegs (2, 3) über eine 90°-Abkantung (15) in die um die Abmessung (A1, A2) von der Dichtkante (4, 5) des Profilstegs (2, 3) beabstandete Montageseite (6, 9) übergeht.

6. Rahmenprofil (1) nach einem der vorangegangenen Ansprüche, bei dem sich die Montageseiten (6, 9) unter einem Winkel von 90° zueinander erstrecken, wobei sie jeweils an einer Stelle maximaler Annäherung aneinander über eine weitere Abkantung (16) in die jeweils zugeordnete Verbindungsseite (8, 10) übergehen.

7. Rahmenprofil (1) nach Anspruch 6, bei dem die Montageseiten (6, 9) Profilseiten eines im Querschnitt rechteckigen Grundkörpers sind, wobei das Rahmenprofil (1) in einer Querschnittsebene senkrecht zu seiner Längsachse spiegelsymmetrisch zu einer durch einen gedachten Schnittpunkt (S) der beiden Montageseiten (6, 9) und eine zu diesem Schnittpunkt (S) diametral gegenüber liegenden Kante (K) des Grundkörpers, an der zwei weitere senkrecht zueinander verlaufende Profilseiten (17, 18) des Grundkörpers ineinander übergehen, verlaufenden Symmetrieachse (X) ist.

8. Rahmenprofil (1) nach Anspruch 7, bei dem in der Querschnittsebene die Abkantungen (16) senkrecht zu der Symmetrieachse (X) einen weiteren Mindestabstand (b) mit b > 0 cm aufweisen.

9. Rahmenprofil (1) nach Anspruch 3, bei dem die Verbindungsseite (8, 10) des den Hinterschnitt (11) aufweisenden Profilstegs (2, 3) zwischen der Dichtkante (4, 5) und einer Stelle maximaler Annäherung an die weitere Profilseite (12) eine Mehrzahl unter einem Rasterabstand angeordneter und sich durch die Verbindungsseite (8, 10) hindurch erstreckender Durchlässe (19) aufweist.

10. Rahmenprofil (1) nach Anspruch 2, bei dem das Rahmenprofil (1) ein Horizontalprofil eines Rahmengestells (100) eines Schaltschranks ist, wobei sich die Verbindungsseite (8, 10) des den Hinterschnitt (11) aufweisenden Profilstegs (2, 3) horizontal und oberhalb davon die weitere Profilseite (12) unter dem spitzen Winkel (α) zur Horizontalen (H) und von der Dichtkante (4, 5) im Verlauf des Profilstegs (2, 3) abfallend erstreckt.

11. Rahmenprofil (1) nach Anspruch 10, bei dem das Horizontalprofil ein oberes Horizontalprofil des Rahmengestells (100) ist, wobei ein Halter (110) für Flachteile (120), der an einem Flachteil (120) an dessen oberem Ende festgelegt ist, auf die weitere Profilseite (12) aufgelegt ist und entweder
- eine Aufsteckdichtung (130) über die Dichtkante (4, 5) auf den Profilsteg (2, 3) mit dem Hinterschnitt (11) aufgesteckt ist, die mit einer Dichtfläche (131) an einer dem Horizontalprofil zugewandten Innenseite (121) eines Flachteils (120) anliegt, oder
- ein Dichtelement (140) an der Innenseite (121) des Flachteils (120) angeordnet ist, das an der Dichtkante (4, 5) anliegt,
so dass die Aufsteckdichtung (130) oder das Dichtelement (140) durch eine Hangabtriebskraft, die der Halter (110) mit dem daran festgelegten Flachteil (120) auf der weiteren Profilseite (12) erfährt, komprimiert ist.

12. Rahmenprofil (1) nach Anspruch 10 oder 11, bei dem die weitere Profilseite (12) eine über ihre gesamte Fläche geschlossene Profilseite ist, die mit einer geraden Stegverbindungsseite (14), in die sie über eine Abkantung (13) unter einem stumpfen Winkel (β) übergeht, eine Regenrinne (30) bildet.

13. Rahmengestell (100) für einen Schaltschrank, das vier Vertikalprofile (101) und acht Horizontalprofile (102) aufweist, wobei alle zwölf Profile (101, 102) ein identisches Rahmenprofil (1) nach einem der Ansprüche 1 bis 12 sind, von denen jeweils drei in acht Ecken (103) des Rahmengestells (100) senkrecht zueinander ausgerichtet miteinander verbunden sind.

14. Rahmengestell (100) nach Anspruch 13, bei dem an den sechs Seiten des Rahmengestells (100) Dichtkanten (4, 5) von vier rechtwinklig aneinander grenzenden Rahmenprofilen (1) eine rechteckige, umlaufend geschlossene Dichtkante bilden, die eine äußere Kante der jeweiligen Seite des Rahmengestells (100) bildet.

## Claims

1. A frame profile (1) for a frame rack (100) of a switch cabinet, wherein the frame profile (1) has:
- a first and a second profile web (2, 3), wherein a free end of the first profile web (2) has a first sealing edge (4), and a free end of the second profile web (3) has a second sealing edge (5), wherein at least one of the profile webs (2, 3) has an undercut (11),
- a first mounting side (6) with fixing receptacles (7), which first mounting side is spaced apart from the first sealing edge (4) by a first dimension (A1) of a first connecting side (8) of the first profile web (2), which connects the first mounting side (6) to the first sealing edge (4),
- a second mounting side (9) with fixing receptacles (7), which second mounting side is spaced apart from the second sealing edge (5) by a second dimension (A2) of a second connecting side (10) of the second profile web (3), which connects the second mounting side (9) to the second sealing edge (5),
**characterized in that** the connecting side (8, 10) of the profile web (2, 3) having the undercut (11) transitions at the sealing edge (4, 5) via a continuous folded edge (U) of more than 180° into an additional profile side (12) of the profile web (2, 3) having the undercut (11).

2. The frame profile (1) according to Claim 1, in which the connecting side (8, 10) of the profile web (2, 3) having the undercut (11) extends at an acute angle (α), where α > 0°, towards an additional profile side (12) of the profile web (2, 3) having the undercut (11).

3. The frame profile (1) according to Claim 1 or 2, in which the connecting side (8, 10) of the profile web (2, 3) having the undercut (11) and the additional profile side (12) of the profile web (2, 3) having the undercut (11) converge up to a minimum spacing (a), where a > 0 cm.

4. The frame profile (1) according to Claim 3, in which the additional profile side (12) of the profile web (2, 3) having the undercut (11), at a site of maximum convergence of the connecting side (8, 10), transitions via a bent edge (13) at an obtuse angle (β) into a straight web connecting side (14) which connects the two profile webs (2, 3) to one another via the additional profile sides (12) thereof.

5. The frame profile (1) according to any one of the preceding claims, in which the connecting side (8, 10) of the profile web (2, 3) having the undercut (11) transitions via a 90° bent edge (15) into the mounting side (6, 9) spaced apart by the dimension (A1, A2) from the sealing edge (4, 5) of the profile web (2, 3).

6. The frame profile (1) according to any one of the preceding claims, in which the mounting sides (6, 9) extend at an angle of 90° with respect to one another, wherein they transition in each case at a site of maximum convergence towards one another via an additional bent edge (16) into the respective associated connecting side (8, 10).

7. The frame profile (1) according to Claim 6, in which the mounting sides (6, 9) are profile sides of a base body which is rectangular in cross section, wherein the frame profile (1), in a cross-sectional plane perpendicular to the longitudinal axis thereof, is mirror symmetrical with respect to a symmetry axis (X) extending through an imaginary intersection (S) of the two mounting sides (6, 9) and an edge (K) of the base body, which is located diametrically opposite this intersection (S) and on which two additional profile sides (17, 18) of the base body, which extend perpendicularly to one another, transition into one another.

8. The frame profile (1) according to Claim 7, in which, in the cross-sectional plane, the bent edges (16) have an additional minimum spacing (b) perpendicularly to the symmetry axis (X), where b > 0 cm.

9. The frame profile (1) according to Claim 3, in which, between the sealing edge (4, 5) and a site of maximum convergence on the additional profile side (12), the connecting side (8, 10) of the profile web (2, 3) having the undercut (11) has a plurality of passages (19) arranged at a grid spacing and extending through the connecting side (8, 10).

10. The frame profile (1) according to Claim 2, in which the frame profile (1) is a horizontal profile of a frame rack (100) of a switch cabinet, wherein the connecting side (8, 10) of the profile web (2, 3) having the undercut (11) extends horizontally, and, above it, the additional profile side (12) extends at an acute angle (α) with respect to the horizontal (H) and sloping from the sealing edge (4, 5) in the course of the profile web (2, 3).

11. The frame profile (1) according to Claim 10, in which the horizontal profile is an upper horizontal profile of the frame rack (100), wherein a holder (110) for flat portions (120), which is secured on a flat portion (120) on the upper end thereof, is placed on the additional profile side (12), and either
- a fit-on seal (130) is fit via the sealing edge (4, 5) onto the profile web (2, 3) having the undercut (11), which fit-on seal is applied with a sealing surface (131) against an inner side (121) of a flat portion (120), which faces the horizontal profile, or
- a sealing element (140) is arranged on the inner side (121) of the flat portion (120), which sealing element is applied against the sealing edge (4, 5),
so that the fit-on seal (130) or the sealing element (140) is compressed by a downward force, to which the holder (110) with the flat portion (120) secured thereto is exposed on the additional profile side (12).

12. The frame profile (1) according to Claim 10 or 11, in which the additional profile side (12) is a profile side which is closed over its entire surface and which, with a straight connecting side (14) into which it transitions via a bent edge (13) at an obtuse angle (β), forms a rain gutter (30).

13. A frame rack (100) for a switch cabinet, which has four vertical profiles (101) and eight horizontal profiles (102), wherein all twelve profiles (101, 102) are an identical frame profile (1) according to any one of Claims 1 to 12, of which in each case three on eight corners (103) of the frame rack (100) are connected to one another, oriented perpendicularly with respect to one another.

14. The frame rack (100) according to Claim 13, in which, on the six sides of the frame rack (100), sealing edges (4, 5) of four frame profiles (1) adjoining one another at right angles form a rectangular, peripherally closed sealing edge which forms an outer edge of the respective side of the frame rack (100).

## Revendications

1. Profilé de châssis (1) pour un châssis (100) d'une armoire de commande, le profilé de châssis (1) comprenant :
- une première et une deuxième nervures profilées (2, 3), une extrémité libre de la première nervure profilée (2) comprenant une première arête d'étanchéité (4) et une extrémité libre de la deuxième nervure profilée (3) comprenant une deuxième arête d'étanchéité (5), au moins une des nervures profilées (2, 3) comprenant une contre-dépouille (11),
- un premier côté de montage (6) avec des logements de fixation (7), qui est distante de la première arête d'étanchéité (4), d'une première dimension (A1) d'un premier côté de liaison (8) de la première nervure profilée (2), qui relie le premier côté de montage (6) avec la première arête d'étanchéité (4),
- un deuxième côté de montage (9) avec des avec des logements de fixation (7), qui est distante de la deuxième arête d'étanchéité (5), d'une deuxième dimension (A2) d'un deuxième côté de liaison (10) de la deuxième nervure profilée (3), qui relie le deuxième côté de montage (9) avec la deuxième arête d'étanchéité (5),
**caractérisé en ce que** le côté de liaison (8, 10) de la nervure profilée (2, 3) comprenant la contre-dépouille (11) se transforme, au niveau de l'arête d'étanchéité (4, 5), par l'intermédiaire d'un pliage continu (U) de plus de 180°, en un autre côté profilé (12) de la nervure profilée (2, 3) comprenant la contre-dépouille (11).

2. Profilé de châssis (1) selon la revendication 1, dans lequel le côté de liaison (8, 10) de la nervure profilée (2, 3) comprenant la contre-dépouille (11) s'étend avec un angle aigu (α), avec α > 0°, par rapport à un autre côté profilé (12) de la nervure profilée (2, 3) comprenant la contre-dépouille (11).

3. Profilé de châssis (1) selon la revendication 1 ou 2, dans lequel le côté de liaison (8, 10) de la nervure profilée (2, 3) comprenant la contre-dépouille (11) et l'autre côté profilé (12) de la nervure profilée (2, 3) comprenant la contre-dépouille (11) se rapprochent jusqu'à une distance minimale (a), avec a > 0 cm.

4. Profilé de châssis (1) selon la revendication 3, dans lequel l'autre côté profilé (12) de la nervure profilée (2, 3) se transforme, à un endroit de rapprochement maximal du côté de liaison (8, 10), par l'intermédiaire d'un pliage (13) avec un angle obtus (β), en un côté de liaison de nervure (14) qui relie entre elles des deux nervures profilées (2, 3) par l'intermédiaire de deux autres côtés profilés (12).

5. Profilé de châssis (1) selon l'une des revendications précédentes, dans lequel le côté de liaison (8, 10) de la nervure profilée (2, 3) comprenant la contre-dépouille (11) se transforme, par l'intermédiaire d'un pliage à 90° (15), dans le côté de montage (6, 9) distant, de la dimension (A1, A2), de l'arête d'étanchéité (4, 5) de la nervure profilée (2, 3).

6. Profilé de châssis (1) selon l'une des revendications précédentes, dans lequel les côtés de montage (6, 9) s'étendent avec un angle de 90° entre eux, moyennant quoi ils se transforment chacun, à un endroit de rapprochement maximal entre eux, par l'intermédiaire d'un autre pliage (16), dans le côté de liaison (8, 10) respectif.

7. Profilé de châssis (1) selon la revendication 6, dans lequel les côtés de montage (6, 9) sont les côtés profilés d'un corps de base de section transversale rectangulaire, le profilé de châssis (1) étant, dans un plan de section transversal perpendiculaire à son axe longitudinal, symétrique en miroir par rapport à un axe de symétrie (X) passant par un point d'intersection (S) imaginaire des deux côtés de montage (6, 9) et par une arête (K), diamétralement opposée à ce point d'intersection (S), du corps de base, au niveau de laquelle deux autres côtés profilés (17, 18), perpendiculaires entre eux, du corps de base, se confondent l'un dans l'autre.

8. Profilé de châssis (1) selon la revendication 7, dans lequel, dans le plan de section transversale, les pliages (16) perpendiculaires à l'axe de symétrie (X) présentent une autre distance minimale (b), avec b > 0 cm.

9. Profilé de châssis (1) selon la revendication 3, dans lequel le côté de liaison (8, 10) de la nervure profilée (2, 3) comprenant la contre-dépouille (11) comprend, entre l'arête d'étanchéité (4, 5) et un endroit de rapprochement maximal de l'autre côté profilé (12), une pluralité de passages (19) disposés à intervalles réguliers et s'étendant à travers le côté de liaison (8, 10).

10. Profilé de châssis (1) selon la revendication 2, dans lequel le profilé de châssis est un profilé horizontal d'u châssis (100) d'une armoire de commande, le côté de liaison (8, 10) de la nervure profilée (2, 3) comprenant la contre-dépouille (11) s'étendant horizontalement et, au-dessus de celui-ci, l'autre côté de profilé (12) s'étendant avec un angle aigu (α) par rapport à l'horizontale (H) et de manière descendante à partir de l'arête d'étanchéité (4, 5) dans l'extension de la nervure profilée (2, 3).

11. Profilé de châssis (1) selon la revendication 10, dans lequel le profilé horizontal est un profilé horizontal du châssis (100), un support (110) pour des parties plates (120), qui est fixé à une partie plate (120) étant fixé à son extrémité supérieure, posé sur l'autre côté profilé (12) et
- soit un joint d'étanchéité à insérer (130) est inséré par l'intermédiaire de l'arête d'étanchéité (4, 5) sur la nervure profilée (2, 3) avec la contre-dépouille (11), qui s'appuie avec une surface d'étanchéité (131) contre un côté interne (121) d'une partie plate (120), orientée vers le profilé horizontal,
- soit un élément d'étanchéité (140) est disposé sur le côté interne (121) de la partie plate (120) qui s'appuie contre l'arête d'étanchéité (4, 5),
de façon à ce que le joint d'étanchéité à insérer (130) ou l'élément d'étanchéité (140) soit comprimé, par une force de portance descendante que le support (110) avec la partie plate (120) fixée à celui-ci subit sur l'autre côté profilé (12).

12. Profilé de châssis (1) selon la revendication 10 ou 11, dans lequel l'autre côté profilé (12) est un côté profilé fermé sur toute sa surface, qui forme, avec un côté de liaison de nervure droit (14), dans lequel il se transforme, par l'intermédiaire d'un pliage (13) avec un angle obtus (β), une gouttière (30).

13. Châssis (100) pour une armoire de commande, qui comprend quatre profilés verticaux (101) et huit profilés horizontaux (102), ces douze profilés (101, 102) étant un profilé de châssis (1) identique selon l'une des revendications 1 à 12, dont trois des huit angles (103) du châssis (100) sont reliés entre eux de manière perpendiculaire les uns par rapport aux autres.

14. Châssis (100) selon la revendication 13, dans lequel, au niveau des six côtés du châssis (100), des arêtes d'étanchéité (4, 5) de quatre profilés de châssis (1) perpendiculaires entre eux formant une arête d'étanchéité rectangulaire avec un contour fermé, qui constitué une arête externe du côté correspondant du châssis (100).
